# FASCICULE DE BREVET EUROPEEN

(11) **EP 1 941 705 B1**
(45) Date de publication et mention de la délivrance du brevet: **13.02.2013**
(21) Numéro de dépôt: 06831295.8
(22) Date de dépôt: 25.10.2006
(51) Int. Cl.: H04L 29/12, H04L 29/06, G06F 17/30, H04L 29/08

(54) **PROCEDE ET SYSTEME DE PROTECTION D'UN LIEN D'ACCES A UN SERVEUR**
VERFAHREN UND SYSTEM ZUM SCHÜTZEN EINER SERVERZUGANGS-VERKNÜPFUNG
METHOD AND SYSTEM FOR PROTECTING A SERVER ACCESS LINK

(30) Priorité: 26.10.2005 FR 0510921
(43) Date de publication de la demande: 09.07.2008
(73) Titulaire: France Télécom, 75015 Paris (FR)
(72) Inventeur: LOTTIN, Philippe, F-22560 Trebeurden (FR); LE MERCIER, Claudine, F-22300 Ploubezre (FR); REY, Jean-François, F-22560 Trebeurden (FR)
(74) Mandataire: Desormiere, Pierre-Louis
(86) Numéro de dépôt international: PCT/FR2006/051103
(87) Numéro de publication internationale: WO 2007/048975

(56) Documents cités:
- EP-A- 1 255 395
- NICK KEW: "Running a Reverse Proxy with Apache" APACHEWEEK, [Online] 6 juillet 2004 (2004-07-06), pages 1-11, XP002388117 Extrait de l'Internet: URL:http://www.apacheweek.com/features/rev erseproxies> [extrait le 2006-06-30]
- ERICSSON: "TLS based access security for IMS" 3GPP TSG SA WG3 SECURITY, [Online] 25 février 2005 (2005-02-25), pages 1-42, XP002388118 Extrait de l'Internet: URL:http://www.3gpp.org/ftp/tsg_sa/WG3_Sec urity/TSGS3_37_Sophia/Docs/PDF/S3-050065.p df> [extrait le 2006-06-30]

## Description

### Domaine de l'invention

L'invention se rapporte à la sécurisation de l'accès à des données stockées sur un serveur distant, les données étant accessibles par la diffusion d'un lien d'accès (ex. adresse URL, email IP, etc.). Elle concerne notamment la sécurisation de l'accès à un média ou une information relative à un appelant vis-à-vis d'un appelé.

### Art antérieur

Une adresse électronique, comme par exemple de type URL (Uniform Resource Locator), est un format de nommage universel qui permet de désigner l'emplacement d'une ressource (données, images, vidéos, sons, etc.) sur le réseau Internet. Dans certains cas, il est important de protéger l'accès direct aux ressources.

Dans le cas par exemple d'un service de présentation d'identité OIP (Originating Identification Presentation) lors d'une communication (voix, données) comme par exemple un appel téléphonique du type voix sur IP (Internet Protocol), le correspondant demandé peut recevoir une carte d'identité multimédia de l'appelant. A cet effet, un lien correspondant à une adresse électronique (ex. adresse URL) est reçu par l'appelé pour lui permettre d'accéder à la carte d'identité multimédia de l'appelant enregistrée sur le répertoire réseau de l'appelant qui est accessible via ce lien sur un serveur distant. En l'absence de sécurisation, la connaissance de cette adresse peut permettre à l'appelé de consulter tout le répertoire de l'appelant (informations personnelles et contacts de l'appelant), voire de modifier ou falsifier les données du répertoire.

Pour limiter les attaques directes de l'extérieur, on peut utiliser un serveur dit serveur "proxy inversé" qui permet de masquer la connexion au serveur de contenu qui contient réellement les ressources. Il s'interpose comme relais entre le client et le serveur de contenu en rendant ce dernier invisible pour le client. Le serveur proxy inversé traduit une adresse URL du réseau public qu'il reçoit en une adresse URL privée et transfert le contenu au client comme s'il répondait lui-même à la requête de demande de contenu envoyé par le client.

Le document "Running a Reverse Proxy with Apache" de Nick Kew, disponible à l'URL: http://www.apacheweek.com/features/reverseproxies, donne un exemple de serveur proxy inversé.

Cependant, même avec cette solution, l'appelé ou un tiers dispose d'un accès permanent aux données du répertoire de l'appelant qui peuvent alors au moins être copiées et utilisées par d'autres services.

### Objet et description succincte de l'invention

La présente invention a pour but de remédier aux inconvénients précités et de proposer une solution pour mettre à disposition de façon sécurisée des contenus multimédias, et ce pour une durée limitée définie soit par avance, soit en fonction d'évènements prédéterminés.

Ce but est atteint grâce à un procédé de sécurisation de l'accès à des données stockées sur un serveur de contenu distant, lesdites données étant accessibles depuis un terminal au moyen d'une adresse électronique (URL, adresse email, numéro de téléphone, adresse IP, etc.), caractérisé en ce qu'il comprend les étapes suivantes:
a) une étape de création pour une durée de validité déterminée, d'une adresse électronique de masquage, ladite adresse électronique de masquage étant associée à l'adresse électronique du serveur distant dans un serveur proxy inversé, et
b) une étape de communication de l'adresse électronique de masquage par le serveur proxy inversé au terminal.

Ainsi, le procédé de l'invention permet de sécuriser la diffusion d'une adresse électronique (URL, adresse email, numéro de téléphone, adresse IP, etc.) donnant accès à des ressources multimédias (image, vidéo, sonnerie, etc.) ou à des informations personnelles que l'on souhaite présenter pendant un temps limité. En effet, l'association adresse électronique de masquage/adresse électronique du serveur de contenu qui permet de masquer l'adresse électronique réelle du serveur de contenu au client final n'est opérationnelle que pour une durée limitée. On contrôle ainsi la durée de mise à disposition du contenu.

La durée d'accès aux données du serveur de contenu peut être définie en fonction d'évènements extérieurs. Dans ce cas, l'étape a) peut être notamment initiée par la demande d'établissement d'une session de communication (ex. émission d'un appel voix sur IP de type appel SIP) à destination du terminal de l'appelé, le procédé comprenant en outre une étape c) de désactivation de l'adresse électronique de masquage dans le serveur proxy inversé qui peut être initiée soit après une durée prédéterminée (ex. désactivation de l'adresse électronique de masquage au bout de deux secondes après l'acceptation de la session de communication par l'appelé), soit à la suite d'un évènement dans le réseau de communication comme par exemple au moment de l'acceptation de la session de communication (ex. appel SIP) par l'appelé ou à la fin de la session de communication.

Cela permet, dans l'étape a), à un serveur d'application OIP de réagir à la demande d'établissement de la session de communication (ex. émission d'un appel SIP) par un appelant à destination du terminal de l'appelé en interrogeant une base de données en liaison avec le serveur de contenu pour déterminer l'adresse électronique des données d'identité de l'appelant à transmettre au terminal de l'appelé et en associant à cette adresse électronique l'adresse électronique de masquage, les deux adresses électroniques associées étant transmises au serveur proxy inversé.

Dans ce cas, le procédé de l'invention permet de répondre à la question de confidentialité des informations personnelles de l'appelant disponibles pour l'appelé à partir du répertoire de contacts de l'appelant (photos, coordonnées contacts, etc.), d'éviter la recopie de contenu entre différents services et de protéger le répertoire de contacts de l'appelant d'un accès direct par l'appelé ou un tiers.

Selon un aspect de l'invention, le procédé comprend en outre une étape d'interrogation par le serveur d'application OIP de la base de données pour vérifier si l'utilisateur destinataire de la session de communication est autorisé à accéder aux données d'identité de l'appelant. L'appelant peut configurer son répertoire de contacts en interdisant à certains contacts d'avoir accès à son répertoire pour la présentation d'identité personnalisée (ex. carte d'identité multimédia). L'utilisateur a ainsi la possibilité d'accroître encore le niveau de sécurité en interdisant l'accès de son répertoire à certains de ses contacts.

La présente invention concerne également un système de sécurisation de l'accès à des données stockées sur un serveur de contenu distant, lesdites données étant accessibles depuis un terminal au moyen d'une adresse électronique, caractérisé en ce qu'il comprend en outre un serveur d'application pour créer, pour une durée de validité déterminée, une adresse électronique de masquage et pour transmettre ladite adresse électronique de masquage associée à l'adresse électronique du serveur distant à un serveur proxy inversé, le terminal accédant temporairement aux données stockées sur le serveur de contenu au moyen de l'adresse électronique de masquage via le serveur proxy inversé.

De même que pour le procédé décrit ci-dessus, le système de l'invention comprend des moyens (serveur d'application) pour créer une association entre l'adresse électronique réelle du serveur contenu et une adresse électronique de masquage et transmettre cette association à un serveur proxy inversé rendant invisible l'adresse électronique du serveur de contenu pour le client. Le serveur d'application contrôle en outre la durée de validité de cette association pour limiter sur une durée déterminée l'accès par le terminal du client aux données stockées sur le serveur de contenu.

Le système de l'invention peut être mis en oeuvre dans un réseau de communications de type NGN (Next Generation Network) utilisant les technologies de transport en mode paquet. Dans ce cas, le serveur d'application est un serveur d'application OIP et comprend des moyens réagissant à l'émission d'une demande de session de communication (ex. appel SIP) par un appelant à destination du terminal d'un appelé en interrogeant une base de données en liaison avec le serveur de contenu pour déterminer l'adresse électronique des données d'identité de l'appelant à transmettre au terminal et en associant à cette adresse électronique l'adresse électronique de masquage, les deux adresses électroniques associées étant transmises au serveur proxy inversé.

Le serveur d'application OIP comprend en outre des moyens pour désactiver l'association entre adresse électronique de masquage et l'adresse électronique du serveur distant dans le serveur proxy inversé soit après une durée prédéterminée (ex. désactivation de l'adresse électronique de masquage au bout de deux secondes après l'acceptation de la session de communication par l'appelé), soit à la suite d'un évènement dans le réseau de communication comme par exemple au moment de l'acceptation de la session de communication par l'appelé ou à la fin de cette session.

L'accès au répertoire de l'appelant pour permettre la présentation des informations d'identité de l'appelant n'est accessible pour l'appelé que sur une durée limitée et via une adresse électronique de masquage.

Le serveur d'application OIP peut comprendre en outre des moyens pour vérifier si l'utilisateur destinataire de la session de communication est autorisé à accéder aux données d'identité de l'appelant. Cela permet à l'appelé d'interdire l'accès à son répertoire à certains de ses contacts.

L'invention concerne encore un serveur d'application en liaison avec un réseau de transmission de données dans lequel des données stockées sur un serveur de contenu distant sont accessibles depuis un terminal au moyen d'une adresse électronique, caractérisé en qu'il comprend des moyens pour créer temporairement une adresse électronique de masquage associée à une adresse électronique du serveur de contenu distant et pour transmettre les deux adresses associées à un serveur proxy inversé en liaison avec le terminal.

Dans le cas d'un réseau de télécommunications en mode paquet avec service de présentation d'identité OIP, le serveur d'application comprend en outre des moyens réagissant à l'émission d'une demande de session de communication par un appelant à destination dudit terminal en interrogeant une base de données en liaison avec le serveur de contenu pour déterminer l'adresse électronique des données d'identité de l'appelant à transmettre au terminal et en associant à cette adresse électronique l'adresse électronique de masquage, les deux adresses électroniques associées étant transmises au serveur proxy inversé. Il comprend en outre des moyens réagissant soit à un évènement temporelle (ex. désactivation de l'adresse électronique de masquage au bout de deux secondes après l'acceptation de la session de communication par l'appelé), soit à un évènement dans le réseau de communication (acceptation de la session de communication par l'appelé ou fin de la session) en désactivant l'association entre l'adresse électronique de masquage et l'adresse électronique du serveur distant dans le serveur proxy inversé.

L'invention concerne enfin un programme d'ordinateur destiné à être mis en oeuvre sur un serveur d'application tel que décrit précédemment, caractérisé en ce qu'il comprend des instructions pour créer temporairement une adresse électronique de masquage associée à une adresse électronique d'un serveur de contenu distant et pour transmettre les deux adresses associées à un serveur proxy inversé en liaison avec le terminal.

Le programme peut comprendre en outre des instructions pour réagir à l'émission d'une demande de session de communication par un appelant en interrogeant une base de données en liaison avec le serveur de contenu pour déterminer l'adresse électronique des données d'identité de l'appelant à transmettre et en associant à cette adresse électronique l'adresse électronique de masquage, et des instructions pour réagir soit à un évènement temporelle (ex. désactivation de l'adresse électronique de masquage au bout de deux secondes après l'acceptation de la session de communication par l'appelé), soit à un évènement dans le réseau de communication (acceptation de la session de communication par l'appelé ou fin de la session) en désactivant l'association entre l'adresse électronique de masquage et l'adresse électronique du serveur distant dans le serveur proxy inversé.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique globale d'un mode de réalisation d'un système de protection d'un lien d'accès à un serveur selon l'invention,
- la figure 2 montre un premier exemple de mise en oeuvre dans un système de protection d'un lien d'accès à un serveur selon l'invention,
- la figure 3 montre un deuxième exemple de mise en oeuvre dans un système de protection d'un lien d'accès à un serveur selon l'invention,
- la figure 4 montre un troisième exemple de mise en oeuvre dans un système de protection d'un lien d'accès à un serveur selon l'invention.

### Description détaillée des modes de réalisation de l'invention

La présente invention propose une solution pour permettre la protection de l'accès à des données stockés sur un serveur et accessibles via une adresse électronique qui peut être de tout type et notamment de type URL ("Uniform ressource Locator"), adresse email, adresse IP ("Internet Protocol"), numéro de téléphone, etc. Les données peuvent être de tout type (images, sonneries, vidéo, etc.). D'une manière générale, le principe de protection de l'invention associe l'utilisation d'un serveur proxy inversé pour masquer l'adresse électronique réelle du serveur donnant accès aux données avec un serveur d'application qui contrôle le serveur proxy inversé pour créer dans ce dernier une adresse électronique de masquage avec une durée de validité limitée dans le temps. Ainsi, comme expliqué plus loin en détail, l'utilisateur destiné à accéder aux données ne pourra le faire qu'à partir d'une adresse électronique de masquage (i.e. en ignorant l'adresse électronique réelle) et seulement pour une durée limitée.

De façon non limitative, la présente invention s'applique avantageusement à la technologie récente des sessions de communication voix et/ou données comme par exemple les appels téléphoniques voix sur IP de type appels SIP ("Session Initiation Protocole", SIP étant un protocole connu qui permet de créer et gérer des sessions entre utilisateurs pour établir des conversations téléphoniques de type voix sur IP (ou VoIP, "Voice on Internet Protocole"), c'est-à-dire en utilisant des protocoles de transport (transmission par paquets) qui jusqu'ici étaient réservés au transport de données). A titre d'exemple, les sessions de communications établies entre un appelant/demandeur A et un appelé/demandé B peuvent être mises en oeuvre suivant le protocole connu H323 (protocole définie par l'ITU ("International Telecommunications Union") permettant la mise en relation IP (session) entre deux points dans un réseau de communication).

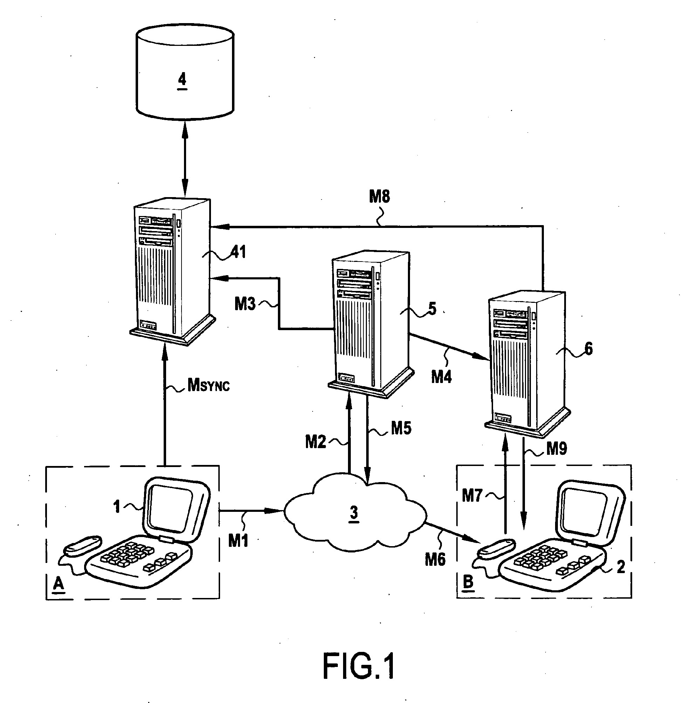

La figure 1 illustre une d'architecture d'un système de communication avec présentation de données d'identification d'appelant dans laquelle la présente invention peut être mise en oeuvre. Par souci de simplification mais de manière non limitative, dans les exemples décrits par la suite, l'adresse électronique correspondra à une adresse URL tandis que la session de communication correspondra à un appel SIP.

L'architecture de la figure 1 comprend deux terminaux 1 et 2 aptes à se connecter à un réseau 3 de type réseau NGN ("Next Generation Network", nouvelle architecture de réseau de communication dont le principe est d'utiliser les technologies de transport en mode paquet, réservées jusqu'alors pour les données, pour transporter l'ensemble des services de télécommunications). Ce type de réseau permet notamment la mise en oeuvre du service OIP ("Originating Identification Presentation") qui permet la présentation de données d'identification de l'appelant sur le terminal de l'appelé lors d'un appel. Le service présentation de données d'identité OIP est nommé CLIP ("Calling Line Identification Presentation") dans le réseau RTC (Réseau Téléphonique Commuté) et RNIS (Réseau Numérique à Intégration de Services) et est normalisé à l'ETSI sous la spécification ETSI EN 300 089 "Integrated Services Digital Network (ISDN); Calling Line Identification Presentation (CLIP) supplementary service; Service description.". Concrètement, ce service permet à l'appelé de recevoir sur son terminal une carte d'identité ou carte de visite multimédia de l'appelant lors de la réception d'un appel de ce dernier.

Comme décrit en détail dans les demandes de brevet FR 05 10387 et FR 05 10389, une telle carte d'identité peut notamment comporter des informations multimédias telles qu'une publicité, un lien vers un site personnel, un avatar, une photo, une bande son, etc. Ces cartes sont créées par l'appelant et mémorisées avec sa liste de contacts également appelée répertoire NAB (Network Address Book). En effet, l'appelant associe chaque carte d'identité qu'il a créée à un plusieurs contacts de son répertoire NAB pour que ceux-ci reçoivent automatiquement la carte correspondante lors d'un appel. La mise en oeuvre de l'envoi de ces cartes simultanément à l'appel téléphonique est également décrite en détail dans les demandes de brevet citées précédemment.

Le système de la figure 1 comprend encore un serveur d'application OIP 5 sur lequel est implémenté le service OIP, un serveur proxy dynamique inversé 6 et une base de données des contacts 4 accessible par un serveur 41.

Par souci de simplification, dans toute la suite de la description, on considère que les terminaux 1 et 2 appartiennent respectivement à un appelant A et à un appelé B. On considère en outre que le service OIP est activé au moins sur la ligne de l'appelé B.

Conformément à l'invention, le serveur d'application OIP 5 gère le service de présentation d'identité OIP. A la réception d'un appel (demande d'établissement d'une session de communication), le serveur d'application OIP 5 interroge la base de données des contacts 4 via le serveur 41 pour connaître l'adresse URL réelle des informations qu'il doit transmettre à l'appelé B. Il créé ensuite une adresse URL de masquage et transmet ces deux informations au proxy dynamique inversé 6 lors de l'activation. Cette adresse URL de masquage est insérée dans l'appel envoyé à l'appelé B.

Après une durée prédéterminée (ex. désactivation de l'adresse URL de masquage au bout de deux secondes après l'acceptation de l'appel SIP par l'appelé) ou à la suite d'un évènement dans le réseau comme par exemple au moment de l'acceptation de l'appel SIP par l'appelé ou à la fin de l'appel SIP quand l'appelé raccroche, le serveur d'application OIP désactive cette association auprès du proxy dynamique inversé.

Le serveur proxy dynamique inversé 6 gère, dans un service de présentation d'identité OIP de A à B, l'association entre les adresses URL réelles vers des serveurs de contenu (ici le ou les serveurs 41 hébergeant la base de données de contacts 4) et les adresses URL de masquage créées par le serveur d'application OIP 5.

A la réception d'un appel (messages M1 et M2 sur la figure 1) le serveur d'application OIP 5 active une nouvelle association. A la réception d'une requête de l'appelé B (message M7) sur l'adresse URL de masquage, le serveur proxy dynamique inversé 6 interroge l'adresse URL réelle (message M8) puis retransmet le contenu à l'appelé B en masquant totalement le serveur accueillant l'adresse URL réelle (message M9).

Après une durée prédéterminée ou à la suite d'un évènement dans le réseau (ex. début ou fin de la session de communication), le serveur d'application OIP 5 désactive l'association précédente rendant inaccessible l'adresse URL réelle via l'adresse URL de masquage. Les données d'identités de l'appelant, comme sa carte d'identité multimédia, transmises lors de la durée d'activation de l'adresse URL de masquage dans le serveur proxy dynamique inversé 6, peuvent être conservées temporairement en mémoire dans le terminal 2 de l'appelé B afin de rester affichées sur le terminal après la désactivation de l'adresse URL de masquage. La durée d'activation de l'adresse URL de masquage et, par conséquent, l'accès indirect au serveur de contenu peut être réduite au minimum nécessaire à la transmission des informations sur le terminal de l'appelé, ce dernier conservant ensuite ces données à l'écran.

En dehors de sa durée d'activation, l'adresse URL de masquage et, bien entendu, l'adresse URL réelle sont inaccessibles aux utilisateurs du réseau.

On peut, par exemple, utiliser le serveur HTTP Apache qui permet de mettre en oeuvre un serveur proxy inversé HTTP par configuration. Il permet ainsi de masquer des adresses URL privées en relayant par son intermédiaire le contenu issu de ces adresses vers les terminaux distants émetteurs des requêtes de contenu.

Néanmoins, dans le cadre de l'invention, ce serveur ne permet pas d'activer et de désactiver l'association adresse URL publique/adresse URL privée (ici adresse URL réelle/adresse URL de masquage) en fonction d'un événement extérieur, notamment un appel SIP. L'association est permanente, et n'est pas dynamique. Pour mettre en oeuvre le serveur proxy dynamique inversé de l'invention, il faut en outre un contrôle de l'activation/désactivation de l'association adresse URL réelle/adresse URL de masquage réalisée par le serveur d'application OIP 5 tel que décrit précédemment.

La base de données des contacts 4 contient la liste des contacts également appelée répertoire NAB (Network Address Book). Les données stockées dans cette base (ex. cartes d'identité multimédias) sont accessibles via une adresse URL (adresse URL "réelle").

La base de données 4 contenant la liste des contacts de l'appelant A, se charge de l'échange interactif avec l'appelant notamment pour créer les cartes d'identités multimédias et pour paramétrer éventuellement le service de restriction d'identité pour un ou plusieurs contacts de la liste (transmission Msync sur la figure 1). Cet échange utilise les techniques habituelles de type :
- serveur vocal interactif (application VoiceXML, ou arborescence audiovisuelle, ou toute autre technique permettant un dialogue automatisé). Il reçoit les commandes de l'utilisateur sous forme de fréquences vocales (DTMF "Dual Tone Multi-Frequency"), par le jeu d'une reconnaissance de la parole ou toutes autres données informatiques, et/ou
- page web, et/ou
- Interface Homme Machine (serveur graphique).

Cette base de données peut se situer sur le serveur du répertoire NAB qui est un répertoire réseau (ex. répertoire "Mes contacts"), sur le serveur de profil du client (ex. HSS, HLR), sur le serveur du répertoire d'une entreprise, etc. Dans tous les cas, la base de données est accessible via une adresse URL réelle.

Les terminaux 1 et 2 sont des terminaux aptes à établir une communication (voix et/ou données) via le réseau 3 de type NGN. En outre, pour recevoir une carte d'identité multimédia, l'appelé B doit utiliser un terminal 2 comprenant des moyens pour recevoir et afficher des données multimédias (ex. ordinateur PC, poste téléphonique IP ("Internet Protocole") SIP, etc.). Si dans son répertoire NAB, A a activé le service de restriction d'identité pour B, l'identité de A ne sera pas présentée à B quel que soit le terminal utilisé par B.

On décrit maintenant un exemple de mise en oeuvre de la présente invention toujours en relation avec la figure 1 et qui illustre l'accès temporaire au répertoire NAB de l'appelant A par l'appelé B pour permettre la présentation de l'identité de A à B lors de l'émission d'un appel SIP de A à B.

L'appelant A émet une requête d'appel à destination d'un appelé B (messages M1, protocole SIP) vers le réseau 3 (ex. réseau NGN) qui réagit en faisant appel au service de présentation de données OIP (messages M2, protocole SIP) implémenté sur le serveur d'application OIP 5.

Le serveur d'application OIP 5 interroge la base de données des contacts 4 pour connaître le répertoire réseau (NAB) de A et déterminer si l'appelé B a le droit d'accéder à celui-ci (messages M3, protocole XCAP ("XML Configuration Access Protocol")/HTTP (HyperText Transfer Protocol")).

Le serveur d'application OIP 5 ayant connaissance de l'adresse URL réelle de la base 4 sur laquelle se trouve le répertoire NAB de A, il associe cette adresse URL à une adresse URL de masquage. Il transmet ensuite au serveur proxy dynamique inversé 6 cette association (messages M4, protocole XML/HTTP).

Le serveur d'application OIP 5 émet alors un message vers le réseau 3 (messages M5, protocole SIP) qui contacte l'appelé B (messages M6, protocole SIP). Ces deux messages (messages M4 et M5) contiennent l'adresse URL de masquage permettant d'accéder au serveur proxy dynamique inversé 6, et par la suite à l'information de A dans le NAB pour cet appel.

L'appelé B contacte le serveur proxy dynamique inversé 4 via cette URL de masquage (messages M7, protocole HTTP).

A l'aide de l'adresse URL réelle du répertoire NAB que connaît le serveur proxy dynamique inversé, il interroge le répertoire NAB de A (messages M8, protocole HTTP). Il retourne ensuite les informations d'identité contenues dans le répertoire NAB de A à l'appelé B (messages M9, protocole HTTP) qui sont notifiées à B par l'intermédiaire des moyens d'affichage de son terminal 2.

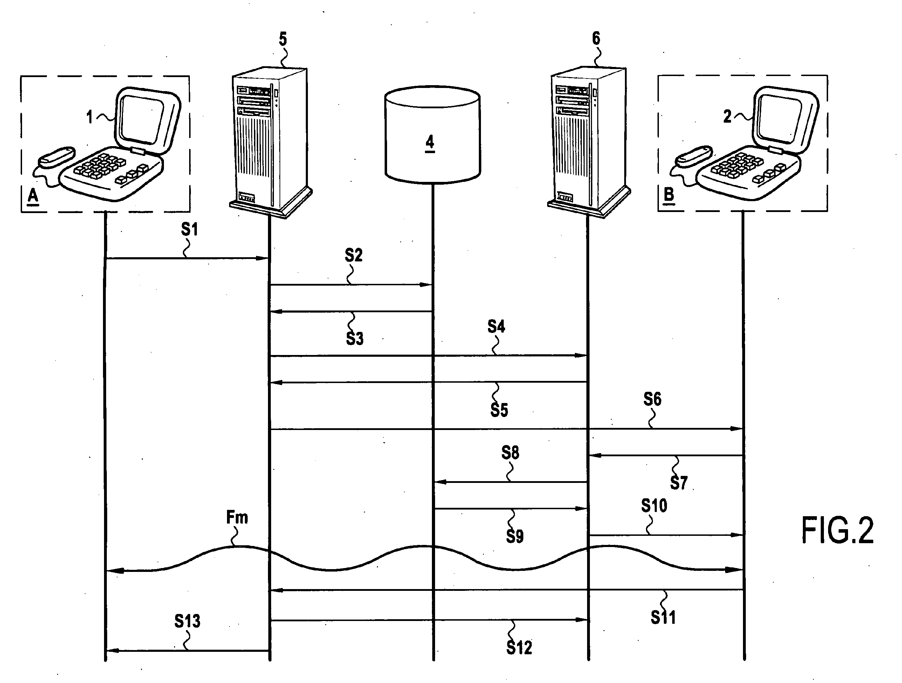

La figure 2 montre les étapes mises en oeuvre dans le système de la figure 1 (étapes correspondant à des échanges de messages dans un flux multimédia Fm entre les différents éléments du système) lors d'un appel SIP de A vers B, B ayant le droit de se connecter au répertoire NAB de A pendant la durée de l'appel conformément à l'invention.

Comme décrit précédemment, lorsque A émet un appel à destination de B (étape S1), le serveur d'application OIP 5 envoie, via l'adresse URL réelle de la base de données des contenus 4, une demande pour savoir si B est autorisé à accéder aux informations d'identité du répertoire NAB de A (étape S2). La base de données des contacts 4 renvoie une réponse indiquant que B est autorisé à accéder au répertoire NAB de A (étape S3). Dès qu'il reçoit la réponse, le serveur d'application OIP 5 crée, pour la durée de l'appel, l'association "adresse URL de masquage créée/adresse URL réelle du répertoire NAB" qu'il envoie au serveur proxy dynamique inversé 6 (étape S4). Après acquittement de réception de cette association par le serveur 6 (étape S5), l'appel de A est transmis à B avec l'adresse URL de masquage permettant au terminal 2 de B d'accéder, pour cet appel, aux informations d'identités de A contenues dans son répertoire NAB (étape S6). Pour obtenir ces informations, le terminal 2 de B envoie au serveur proxy dynamique inversé 6 une requête avec l'adresse de masquage (étape S7). Le serveur proxy dynamique inversé redirige la requête vers la base de données des contacts 4 en utilisant son adresse URL réelle (étape S8). La base 4 retourne en réponse les informations d'identité (ex. carte d'identité multimédia) de A disponibles dans le répertoire NAB (étape S9) au serveur proxy dynamique inversé 6 qui les redirige vers le terminal 2 de B (étape S10).

Lorsque B raccroche (étape S11), le serveur d'application OIP 5 entre en liaison avec le serveur proxy dynamique inversé 6 pour désactiver l'association "adresse URL de masquage créée/adresse URL réelle du répertoire NAB" mettant ainsi fin à la possibilité du terminal 2 de B d'accéder aux informations du répertoire NAB de A sur la base 5 (étape S12). Le serveur d'application OIP 5 informe enfin le terminal 1 de A que B a raccroché et que l'appel est terminé. Comme décrit précédemment, la désactivation de l'association "adresse URL de masquage créée/adresse URL réelle du répertoire NAB" peut être aussi initiée après une durée prédéterminée (ex. désactivation de l'adresse URL de masquage au bout de deux secondes après l'acceptation de l'appel SIP par l'appelé) ou à la suite d'un évènement dans le réseau comme par exemple au moment de l'acceptation de l'appel SIP par l'appelé.

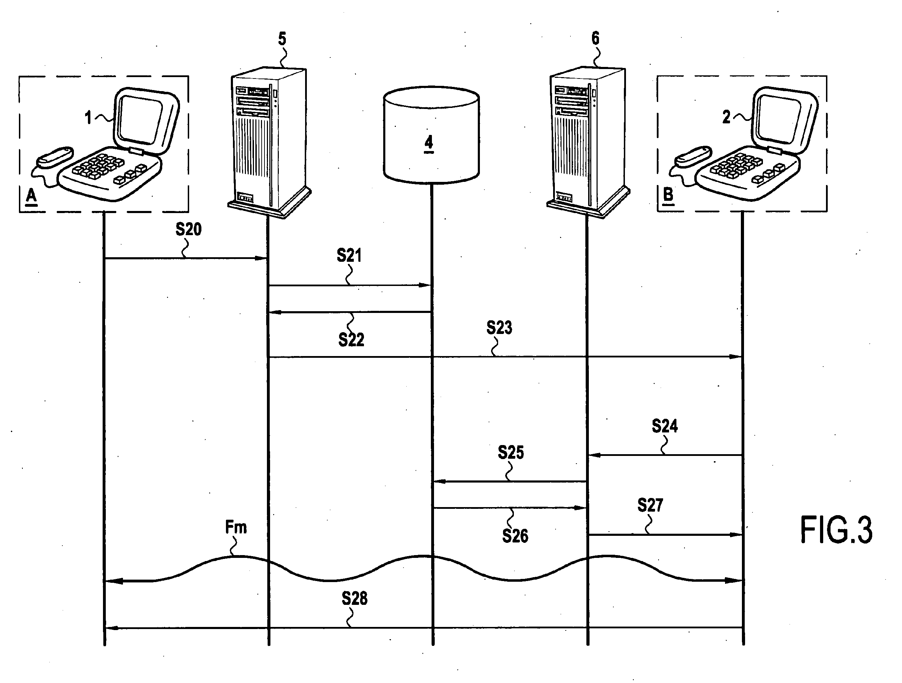

La figure 3 montre les étapes mises en oeuvre dans le système de la figure 1 (étapes correspondant à des échanges de messages dans un flux multimédia Fm entre les différents éléments du système) lors d'un appel SIP de A vers B, B n'ayant pas le droit de se connecter au répertoire NAB de A. Dans cet exemple, A n'a pas activé le service de restriction d'identité OIR ("Originating Identification Restriction"), service qui permet d'empêcher la présentation de l'identité de l'appelant dans un service OIP classique. Ce service est implémenté par le serveur d'application OIP 5 sur requête de A à partir de son terminal 1 (messages Msync sur la figure 1). Ce service concerne les données d'identités brutes non multimédias et non personnalisées différentes de celles disponibles dans le répertoire NAB de A qui ont été personnalisées par A pour chacun des membres de sa liste de contacts.

Lorsque A émet un appel à destination de B (étape S20), le serveur d'application OIP 5 envoie, via l'adresse URL réelle de la base de données des contenus 4, une demande pour savoir si B est autorisé à accéder aux informations d'identité du répertoire NAB de A (étape S21). La base de données des contacts 4 renvoie une réponse indiquant que B n'est pas autorisé à accéder au répertoire NAB de A (étape S22).

Dans ce cas, l'appel de A est transmis au terminal 2 de B mais sans aucune adresse URL de masquage (étape S23). Le terminal 2 de B ne peut pas accéder aux informations d'identités de A contenues dans son répertoire NAB.

Plus précisément, le terminal 2 de B envoie au serveur proxy dynamique inversé 6 une requête pour tenter d'obtenir une adresse de masquage lui permettant d'accéder aux informations d'identité personnalisées de A (étape S24). Le serveur proxy dynamique inversé 6 redirige la requête vers la base de données des contacts 4 (étape S25). La base 4 retourne une réponse négative "informations inexistantes ou interdites" au serveur 6 (étape S26) qui la redirige vers le terminal 2 de B (étape S27).

Toutefois, dans le cas d'un service de présentation d'identité OIP et puisque A n'a pas activé le service de restriction d'identité OIR, l'identité de A pourra quand même être présentée à B. Cette identité ne correspond pas aux données d'identité multimédias personnalisées de A dans son répertoire NAB (ex. carte d'identité de A personnalisée) mais à de simples données d'identités (i.e. nom, numéro d'appel et adresse email de A non multimédias et non personnalisés en fonction de B) fournies par le service OIP normalisé par l'ETSI (European Telecommunications Standard Institute).

La communication se poursuit ainsi jusqu'à la fin de l'appel SIP (étape S28).

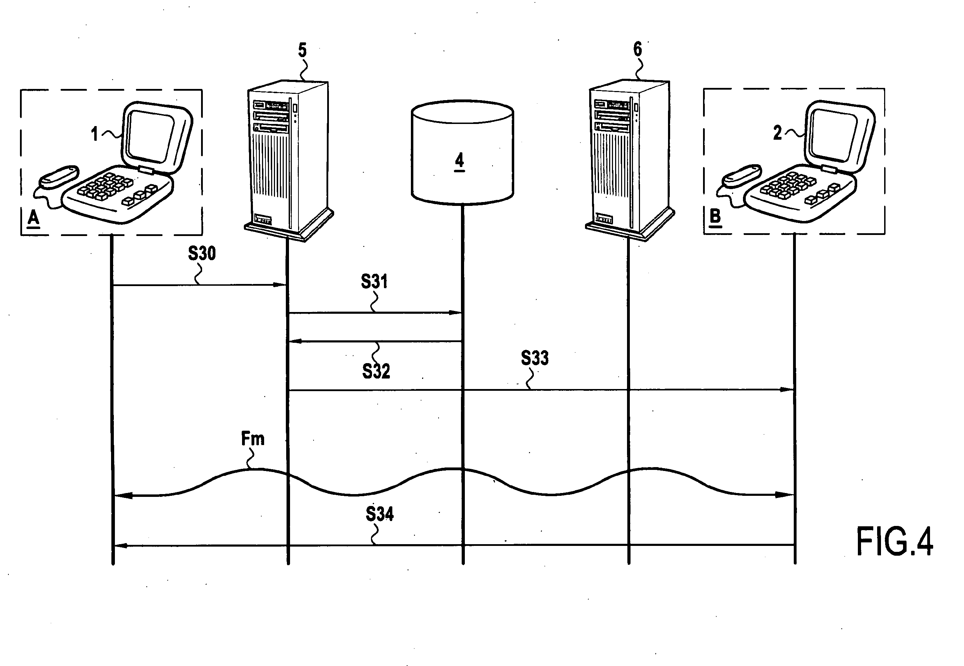

La figure 4 montre les étapes mises en oeuvre dans le système de la figure 1 (étapes correspondant à des échanges de messages dans un flux multimédia Fm entre les différents éléments du système) lors d'un appel SIP de A vers B, A ayant activé le service de restriction d'identité OIR ("Originating Identification Restriction"), service qui permet d'empêcher la présentation de l'identité de l'appelant dans un service OIP classique.

Lorsque A émet un appel à destination de B (étape S30), le serveur d'application OIP 5 envoie, via l'adresse URL réelle de la base de données des contenus 4, une demande pour savoir si B est autorisé à accéder aux informations d'identité du répertoire NAB de A (étape S31). La base de données des contacts 4 renvoie une réponse indiquant que A a activé le service de restriction d'identité OIR (étape S32).

Dans ce cas, l'appel de A est transmis au terminal 2 de B mais sans aucune présentation d'information d'identité de A (étape S33).

La communication se poursuit ainsi jusqu'à la fin de l'appel SIP (étape S34).

On constate que dans le cas où A active le service de restriction d'identité OIR, B ne peut avoir connaissance d'aucune information qu'elle soit issue des données d'identité brutes (i.e. nom, numéro d'appel et adresse email de A non multimédia et non personnalisées en fonction de B) fournies par le service OIP normalisé par l'ETSI ou des données d'identité multimédias personnalisées de A dans son répertoire NAB (ex. carte d'identité de A personnalisée en fonction de B).

## Revendications

1. Procédé de sécurisation de l'accès à des données stockées sur un serveur de contenu distant (41), lesdites données étant accessibles depuis un terminal au moyen d'une adresse électronique, le procédé comprenant les étapes suivantes:
a) une étape (S4) de création d'une adresse électronique de masquage, ladite adresse électronique de masquage étant associée à l'adresse électronique du serveur distant dans un serveur proxy inversé (6), et
b) une étape (S6) de communication de l'adresse électronique de masquage par le serveur proxy inversé (6) au terminal (2),
**caractérisé en ce que** l'adresse électronique de masquage est créée pour une durée de validité déterminée.

2. Procédé selon la revendication 1, **caractérisé en ce que** l'étape a) (S4) est initiée lors de l'émission d'une demande d'établissement d'une session de communication à destination dudit terminal (2) et **en ce qu'**il comprend en outre une étape c) (S12) de désactivation de l'adresse URL de masquage dans le serveur proxy inversé (6) après une durée prédéterminée ou en réponse à un évènement dans la session de communication.

3. Procédé selon la revendication 2, **caractérisé en ce que** dans l'étape a) (S4), un serveur d'application de présentation d'identité (5) réagit à l'émission d'une demande d'établissement d'une session de communication par un appelant (A) à destination dudit terminal (2) en interrogeant une base de données (4) en liaison avec le serveur de contenu (41) pour déterminer l'adresse électronique des données d'identité de l'appelant (A) à transmettre au terminal et en associant à cette adresse électronique l'adresse électronique de masquage, les deux adresses électroniques associées étant transmises au serveur proxy inversé (6).

4. Procédé selon la revendication 3, **caractérisé en ce qu'**il comprend en outre une étape d'interrogation (S21) par le serveur d'application de présentation d'identité (5) de la base de données (4) pour vérifier si l'utilisateur (B) destinataire de la demande d'établissement d'une session de communication est autorisé à accéder aux données d'identité de l'appelant (A).

5. Système de sécurisation de l'accès à des données stockées sur un serveur de contenu distant (41), lesdites données étant accessibles depuis un terminal (2) au moyen d'une adresse électronique, **caractérisé en ce qu'**il comprend un serveur d'application (5) pour créer une adresse électronique de masquage et pour transmettre ladite adresse électronique de masquage associée à l'adresse électronique du serveur distant (41) à un serveur proxy inversé (6), le terminal (2) étant apte à accéder aux données stockées sur le serveur de contenu (41) au moyen de l'adresse électronique de masquage via le serveur proxy inversé (6), **caractérisé en ce que** l'adresse électronique de masquage est créée pour une durée déterminée.

6. Système selon la revendication 5, **caractérisé en ce que** le serveur d'application (5) est un serveur d'application de présentation d'identité et **en ce qu'**il comprend des moyens réagissant à l'émission d'une demande d'établissement d'une session de communication par un appelant (A) à destination dudit terminal (2) en interrogeant une base de données (4) en liaison avec le serveur de contenu (41) pour déterminer l'adresse électronique des données d'identité de l'appelant (A) à transmettre au terminal (2) et en associant à cette adresse électronique l'adresse électronique de masquage, les deux adresses électronique associées étant transmises au serveur proxy inversé (6).

7. Système selon la revendication 6, **caractérisé en ce que** le serveur d'application de présentation d'identité (5) comprend en outre des moyens pour désactiver l'association entre adresse électronique de masquage et l'adresse électronique du serveur distant dans le serveur proxy inversé (6) après une durée prédéterminée ou en réponse à un évènement dans la session de communication.

8. Système selon la revendication 6 ou 7, **caractérisé en ce que** le serveur d'application de présentation d'identité (5) comprend en outre des moyens pour vérifier si l'utilisateur (B) destinataire de la demande de session de communication est autorisé à accéder aux données d'identité de l'appelant (A).

9. Serveur d'application (5) en liaison avec un réseau de transmission de données dans lequel des données stockées sur un serveur de contenu distant (41) sont accessibles depuis un terminal (2) au moyen d'une adresse électronique, ledit serveur comprenant des moyens pour créer une adresse électronique de masquage associée à une adresse électronique du serveur de contenu distant (41) et pour transmettre les deux adresses associées à un serveur proxy inversé (6) en liaison avec le terminal (2), **caractérisé en ce que** l'adresse électronique de masquage est créée pour une durée déterminée.

10. Programme d'ordinateur destiné à être mis en oeuvre sur un serveur d'application (5) selon la revendication 9, ledit programme comprenant des instructions pour créer une adresse électronique de masquage associée à une adresse électronique d'un serveur de contenu distant (41) et pour transmettre les deux adresses associées à un serveur proxy inversé (6) en liaison avec le terminal (2), **caractérisé en ce que** l'adresse électronique de masquage est créée pour une durée déterminée.

## Claims

1. Method for securing access to data stored on a remote content server (41), said data being accessible from a terminal by means of an electronic address, the method comprising the following steps:
a) a step (S4) of creation of a masking electronic address, said masking electronic address being associated with the electronic address of the remote server in a reverse proxy server (6), and
b) a step (S6) of communication of the masking electronic address by the reverse proxy server (6) to the terminal (2),
**characterized in that** the masking electronic address is created for a predetermined validity period.

2. Method according to Claim 1, **characterized in that** the step a) (S4) is initiated upon the transmission of a request to set up a communication session to said terminal (2) and **in that** it also comprises a step c) (S12) of deactivation of the masking URL address in the reverse proxy server (6) after a predetermined period or in response to an event in the communication session.

3. Method according to Claim 2, **characterized in that**, in the step a) (S4), an identity presentation application server (5) reacts to the transmission of a request to set up a communication session by a calling party (A) to said terminal (2) by interrogating a database (4) linked with the content server (41) to determine the electronic address of the identity data of the calling party (A) to be transmitted to the terminal and by associating with this electronic address the masking electronic address, the two associated electronic addresses being transmitted to the reverse proxy server (6).

4. Method according to Claim 3, **characterized in that** it also comprises a step of interrogation (S21) by the identity presentation application server (5) of the database (4) to check whether the user (B) who is the recipient of the request to set up a communication session is allowed to access the identity data of the calling party (A).

5. System for securing access to data stored on a remote content server (41), said data being accessible from a terminal (2) by means of an electronic address, **characterized in that** it comprises an application server (5) for creating a masking electronic address and for transmitting said masking electronic address associated with the electronic address of the remote server (41) to a reverse proxy server (6), the terminal (2) being able to access the data stored on the content server (41) by means of the masking electronic address via the reverse proxy server (6), **characterized in that** the masking electronic address is created for a determined period.

6. System according to Claim 5, **characterized in that** the application server (5) is an identity presentation application server and **in that** it comprises means reacting to the transmission of a request to set up a communication session by a calling party (A) to said terminal (2) by interrogating a database (4) linked with the content server (41) to determine the electronic address of the identity data of the calling party (A) to be transmitted to the terminal (2) and by associating with this electronic address the masking electronic address, the two associated electronic addresses being transmitted to the reverse proxy server (6).

7. System according to Claim 6, **characterized in that** the identity presentation application server (5) also comprises means for deactivating the association between masking electronic address and the electronic address of the remote server in the reverse proxy server (6) after a predetermined period or in response to an event in the communication session.

8. System according to Claim 6 or 7, **characterized in that** the identity presentation application server (5) also comprises means for checking whether the user (B) who is the recipient of the communication session request is authorized to access the identity data of the calling party (A).

9. Application server (5) linked with a data transmission network in which data stored on a remote content server (41) are accessible from a terminal (2) by means of an electronic address, said server comprising means for creating a masking electronic address associated with an electronic address of the remote content server (41) and for transmitting the two associated addresses to a reverse proxy server (6) linked with the terminal (2), **characterized in that** the masking electronic address is created for a determined period.

10. Computer program intended to be implemented on an application server (5) according to Claim 9, said program comprising instructions for creating a masking electronic address associated with an electronic address of a remote content server (41) and for transmitting the two associated addresses to a reverse proxy server (6) linked with the terminal (2), **characterized in that** the masking electronic address is created for a determined period.

## Patentansprüche

1. Verfahren zur Sicherung des Zugangs zu Daten, die auf einem entfernten Inhaltsserver (41) gespeichert sind, wobei die Daten von einem Terminal mit Hilfe einer elektronischen Adresse zugänglich sind, wobei das Verfahren die folgenden Schritte umfasst:
a) einen Schritt (S4) der Erstellung einer nicht sichtbaren elektronischen Adresse, wobei die nicht sichtbare elektronische Adresse der elektronischen Adresse des entfernten Servers in einem Reverse-Proxy-Server (6) zugeordnet ist, und
b) einen Schritt (S6) der Übermittlung der nicht sichtbaren elektronischen Adresse vom Reverse-Proxy-Server (6) an das Terminal (2),
**dadurch gekennzeichnet, dass** die nicht sichtbare elektronische Adresse für eine bestimmte Gültigkeitsdauer erstellt wird.

2. Verfahren nach Anspruch 1, **dadurch gekennzeichnet, dass** der Schritt a) (S4) beim Senden eines Antrags auf Herstellung einer Kommunikationssitzung in Richtung des Terminals (2) eingeleitet wird, und dass es ferner einen Schritt c) (S12) der Deaktivierung der nicht sichtbaren Adresse URL im Reverse-Proxy-Server (6) nach einer vorbestimmten Dauer und als Antwort auf ein Ereignis in der Kommunikationssitzung umfasst.

3. Verfahren nach Anspruch 2, **dadurch gekennzeichnet, dass** in Schritt a) (S4) ein Anwenderserver zur Identitätspräsentation (5) auf das Senden eines Antrags auf Herstellung einer Kommunikationssitzung durch einen Anrufer (A) in Richtung des Terminals (2) reagiert, wobei er eine Datenbasis (4) abfragt, die mit dem Inhaltsserver (41) in Verbindung steht, um die elektronische Adresse der Identitätsdaten des Anrufers (A), die an das Terminal zu übermitteln ist, zu bestimmen, und wobei er dieser elektronischen Adresse die nicht sichtbare elektronische Adresse zuordnet, wobei die einander zugeordneten elektronischen Adressen an den Reverse-Proxy-Server (6) übermittelt werden.

4. Verfahren nach Anspruch 3, **dadurch gekennzeichnet, dass** es ferner einen Schritt (S21) des Abfragens der Datenbasis (4) durch den Anwenderserver zur Identitätspräsentation (5) umfasst, um zu überprüfen, ob der Benutzer (B), für den der Antrag auf Herstellung einer Kommunikationssitzung bestimmt ist, autorisiert ist, auf die Identitätsdaten des Anrufers (A) zuzugreifen.

5. System zur Sicherung des Zugangs zu auf einem entfernten Inhaltsserver (41) gespeicherten Daten, wobei die Daten von einem Terminal (2) mit Hilfe einer elektronischen Adresse zugänglich sind, **dadurch gekennzeichnet, dass** es einen Anwenderserver (5) umfasst, um eine nicht sichtbare elektronische Adresse zu erstellen und diese nicht sichtbare elektronische Adresse, die der elektronischen Adresse des entfernten Servers (41) zugeordnet ist, an einen Reverse-Proxy-Server (6) zu übertragen, wobei das Terminal (2) geeignet ist, auf die auf dem Inhaltsserver (41) gespeicherten Daten mit Hilfe der nicht sichtbaren elektronischen Adresse über den Reverse-Proxy-Server (6) zuzugreifen, **dadurch gekennzeichnet, dass** die nicht sichtbare elektronische Adresse für eine bestimmte Dauer erstellt wird.

6. System nach Anspruch 5, **dadurch gekennzeichnet, dass** der Anwenderserver (5) ein Server zur Identitätspräsentation ist, und dass er Mittel umfasst, die auf das Senden eines Antrags auf Herstellung einer Kommunikationssitzung durch einen Anrufer (A) in Richtung des Terminals (2) reagieren, wobei er eine Datenbasis (4) abfragt, die mit dem Inhaltsserver (41) in Verbindung steht, um die elektronische Adresse der Identitätsdaten des Anrufers (A), die an das Terminal (2) zu übermitteln ist, zu bestimmen, und wobei er dieser elektronischen Adresse die nicht sichtbare elektronische Adresse zuordnet, wobei die einander zugeordneten elektronischen Adressen an den Reverse-Proxy-Server (6) übermittelt werden.

7. System nach Anspruch 6, **dadurch gekennzeichnet, dass** der Anwenderserver zur Identitätspräsentation (5) ferner Mittel umfasst, um die Verbindung zwischen nicht sichtbarer elektronischer Adresse und elektronischer Adresse des entfernten Servers in dem Reverse-Proxy-Server (6) nach einer vorbestimmten Dauer oder als Antwort auf ein Ereignis in der Kommunikationssitzung zu deaktivieren.

8. System nach Anspruch 6 oder 7, **dadurch gekennzeichnet, dass** der Anwenderserver zur Identitätspräsentation (5) ferner Mittel umfasst, um zu überprüfen, ob der Benutzer (B), für den der Antrag auf Herstellung einer Kommunikationssitzung bestimmt ist, autorisiert ist, auf die Identitätsdaten des Anrufers (A) zuzugreifen.

9. Anwenderserver (5) in Verbindung mit einem Datenübertragungsnetz, in dem die auf einem entfernten Inhaltsserver (41) gespeicherten Daten von einem Terminal (2) mit Hilfe einer elektronischen Adresse zugänglich sind, wobei der Server Mittel umfasst, um eine nicht sichtbare elektronische Adresse zu erstellen, die einer elektronischen Adresse des entfernten Inhaltsservers (41) zugeordnet ist, und um die beiden einander zugeordneten Adressen an einen Reverse-Proxy-Server (6) in Verbindung mit dem Terminal (2) zu übermitteln, **dadurch gekennzeichnet, dass** die nicht sichtbare elektronische Adresse für eine bestimmte Dauer erstellt wird.

10. Computerprogramm, das dazu bestimmt ist, für einen Anwenderserver (5) nach Anspruch 9 eingesetzt zu werden, wobei das Programm Befehle umfasst, um eine nicht sichtbare elektronische Adresse zu erstellen, die einer elektronischen Adresse eines entfernten Inhaltsservers (41) zugeordnet ist, und um die beiden einander zugeordneten Adressen an einen Reverse-Proxy-Server (6) in Verbindung mit dem Terminal (2) zu übermitteln, **dadurch gekennzeichnet, dass** die nicht sichtbare elektronische Adresse für eine bestimmte Dauer erstellt wird.
